(19) Europäisches Patentamt

European Patent Office

Office européen des brevets

(11) EP 1 406 112 A2

(12) **EUROPEAN PATENT APPLICATION**

(43) Date of publication:
07.04.2004 Bulletin 2004/15

(51) Int Cl.7: **G02F 1/1335**

(21) Application number: 03078014.2

(22) Date of filing: 23.09.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.09.2002 US 253135**

(71) Applicant: **Delphi Technologies, Inc.**
**Troy, MI 48007 (US)**

(72) Inventors:
• **Nelson, Jeffrey J.**
**Otisville, MI 48463 (US)**

• **Miller, Mark J.**
**Grand Blanc, MI 48439 (US)**
• **Sylvester, Gail M.**
**Frankenmuth, MI 48734 (US)**
• **Lippmann, Raymond**
**Howell, MI 48843 (US)**

(74) Representative: **Denton, Michael John**
**Delphi European Headquarters,**
**64 avenue de la Plaine de France,**
**Paris Nord II,**
**BP 60059,**
**Tremblay-en-France**
**95972 Roissy Charles de Gaulle Cédex (FR)**

(54) **Apparatus and method for maximizing lcd contrast**

(57) The present invention is directed to a liquid crystal display (10b). The liquid crystal display (10b) comprises a liquid crystal cell (104) and an optical plate (100) coupled to the liquid crystal cell (104) for improving contrast at wide viewing angles. The optical plate (100) preferably consists of a plurality of micro-spheres (102), and a lenslet array (138) is disposed between light source (103) and liquid crystal display (10b).

EP 1 406 112 A2

## Description

Technical Field

The present invention relates to liquid crystal displays. More specifically, the present invention relates to liquid crystal displays that have enhanced optical properties at wide viewing angles.

Background of the Invention

Liquid crystal displays (LCDs) have a plurality of pixels or segments that may be excited by an electric field so that information, such as light from a light source, may be optically communicated to a receiver, such as a viewer. It is known in the art that typically, there is an asymmetry to the contrast of LCD displays. It is also known that LCD displays comprise, among other elements, a rear polarizer, a front polarizer, and a layer of LC fluid.

In operation, when a pixel is excited to an "on" state, light passes through the rear polarizer and is minimally rotated by the LC fluid prior to encountering the front polarizer. The front polarizer may be in one of two orientations depending on whether it is desired that the LCD be transmissive when the power is on or untransmissive (dark) when the power is off.

In the first orientation of the front polarizer, light that passes through a maximally excited pixel will be blocked by the front polarizer, and the pixel will appear dark (i.e. the display is transmissive when the power is off). In the second orientation of the front polarizer, light that passes through a maximally excited pixel will appear to be active because it is allowed to pass through the front polarizer (i.e. the display is dark when the power is off). In the first case where the "on" pixels are dark, the display is said to operate in the "positive mode." In the second case where the "on" pixels appear to be active, the display is said to be operating in the "negative mode." In the following discussion, the LCD display is assumed to operate in the "negative mode." However, the following description may apply equally to the "positive mode." When the electric field sufficiently excites a pixel or segment, the pixel has a higher or lower amount of luminance compared with pixels or segments that are excited to a lesser degree. Thus, pixels that are sufficiently excited to a higher degree are considered to be in an "on-state" (i.e. more or less light per area of the pixel is transmitted in the direction of the viewer's eye). Likewise, when a pixel is not sufficiently excited by an electric field, it has a lesser amount of luminance and is considered to be in an "off-state" (i.e. less light per area of the pixel is transmitted in the direction of the viewer's eye). For purposes of discussion, "on" pixels will be considered to transmit more light than "off" pixels.

A contrast ratio of a pixel, CR, is the ratio of a maximum transmitted light, $T_{max}$, in the "on" state and a minimum transmitted light, $T_{min}$, in the "off" state.

$$CR = \frac{T_{max}}{T_{min}}$$

In the above equation, the minimum transmitted light value, $T_{min}$, dominates the contrast ratio, CR, because $T_{min}$ is generally a small number that is in the denominator.

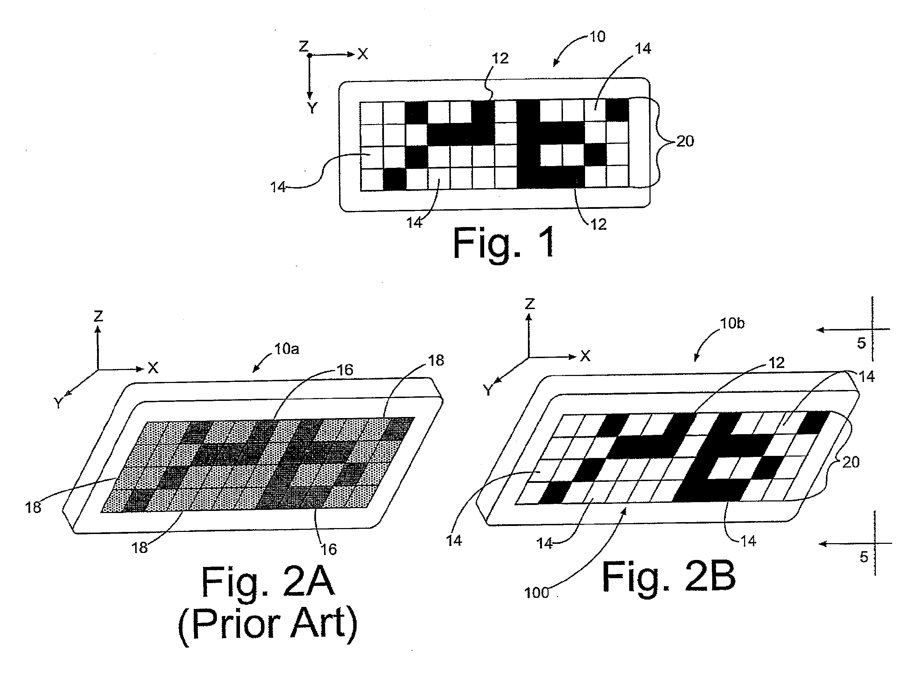

The contrast ratio of an LCD depends on the viewing angle of the viewer. A "prime viewing angle" is the angle at which the contrast ratio is at its maximum compared with other angles. As seen in Figure 1, an LCD 10 is observed from a top-dead-center view in an xyz plane. The LCD 10 comprises an active viewing area 20 with four rows of ten pixels. The viewing area 20 contains off-state pixels 12 and on-state pixels 14. When the LCD 10 is observed at an angle that is normal to the viewing area 20, the contrast ratio is maximized. This is considered to be "the prime viewing angle." Generally, the prime viewing angle is close to the normal viewing angle of the display.

However, as seen in Figure 2A, when an LCD 10a is viewed at an angle which is substantially different from the prime viewing angle, the contrast ratio, in general, will be diminished in some circumstances to a considerable degree. The deviation of the prime viewing angle is hereinafter referred to in the following discussion as a reference angle (RA).

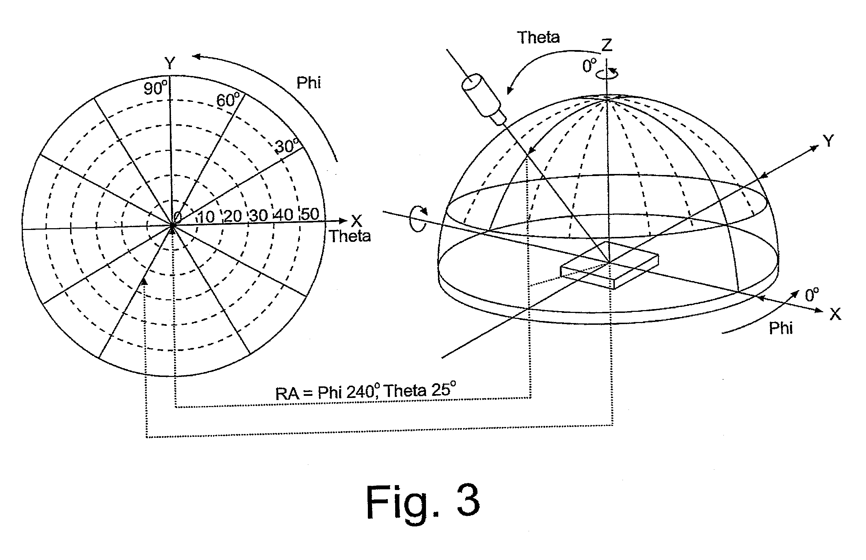

As seen in Figure 3, the RA has two components: the angle from the normal, θ, and the angle in the plane of the LCD from which it is observed, φ. The angle from the normal, θ, is represented by concentric dotted circles in the xy plane and is referenced from the center of the polar point (i.e. the z-axis). The outer perimeter of the outermost circle in the xy plane represents the angle in the plane of the LCD from which it is observed, φ. For example, the LCD may be viewed from the right at φ = 0° (i.e. 3 o'clock viewing), from the bottom at φ = 270° (i.e. 6 o'clock viewing), from the left at φ = 180⁰ (i.e. 9 o'clock viewing), or from the top at φ = 90° (i.e. 12 o'clock viewing). In order to establish a frame of reference for the following explanation, the off- and on-state pixels 12, 14 in Figure 1 correlate to off- and on-state pixels in 16, 18 in Figure 2A.

Referring back to Figure 2A, it is apparent that when the LCD 10a is viewed at an angle that deviates from the prime viewing angle, the off-state pixels 16 become more transmissive and have a higher luminance (i.e. the pixels shift from black to dark gray), and the on-state pixels 18 become less transmissive and have a lower luminance (i.e. the pixels shift from white to light gray). For example, if a wide-spectrum light source, such as a white light emitting diode (LED), is implemented in the design of the LCD 10a, the viewing area of the LCD 10a may change color to purple, blue, or green at different angles from the normal since the change in transmission from the prime viewing angle is color dependant. However, it is important to note that the pixels the pixels 16, 18 may change color only with respect to their observational appearance and not with respect to their physical properties.

In other situations, when the LCD deviates from the prime viewing angle, the on-state pixels 18 may retain their optimal luminance and the off-state pixels 16 may have a higher luminance, or vice versa. At some viewing angles, the "on" and "off" pixels may look the same; this would mean that the minimum contrast ratio, CR is equal to 1.

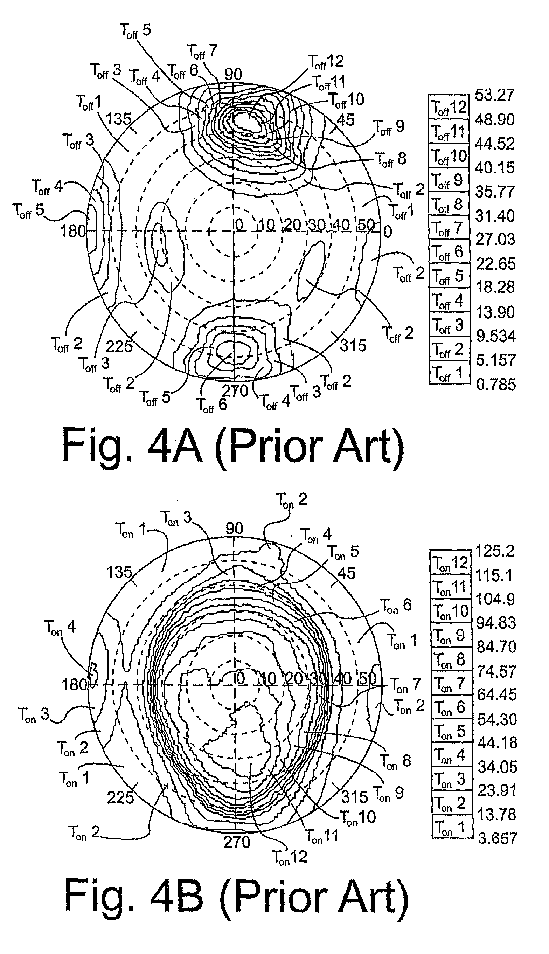

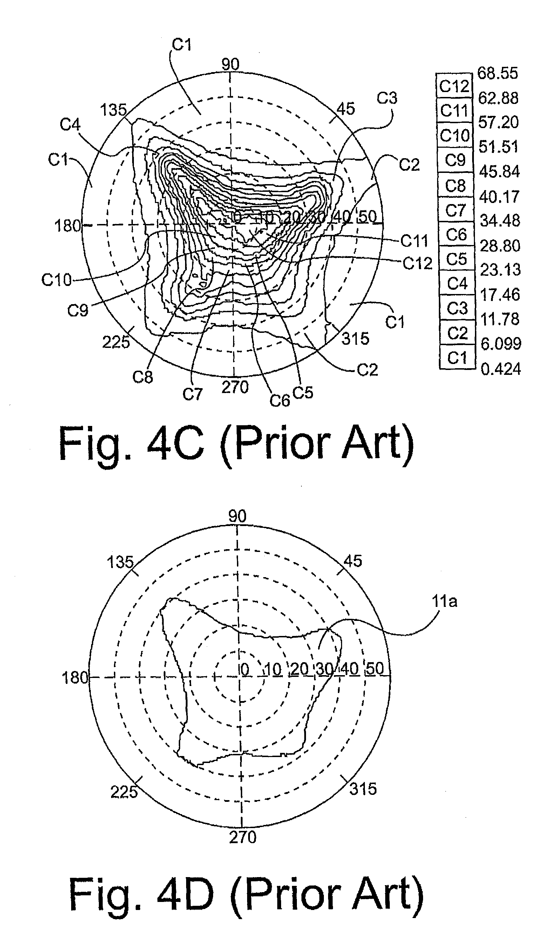

In order to find data that relates to the contrast of the LCD 10a, iso-transmission plots for the LCD 10a in the "on" and "off" states are generated. Figures 4A and 4B show iso-transmission plots for the LCD 10a in the "off" and "on" states, respectively. The data in Figure 4B is divided by the data in Figure 4A to form the data for an iso-contrast plot of the LCD 10a, as shown in Figure 4C (i.e. a ratio of the on-state iso-transmission plot (Figure 4B) and the off-state iso-transmission plot (Figure 4A)).

The iso-contrast plot of Figure 4C represents the contrast of the LCD 10a when viewed from different RAs. The contrast ratio depicted in Figure 4C is defined from a minimum contrast ratio C1 to a maximum contrast ratio C12. Generally, from a top-dead-center view (i.e. RA = ($\varphi$ = 0-360$^0$, $\theta$ = 0°)), the maximum contrast ratio is C12, which is approximately equivalent to a contrast category of 62.88 through 68.55. For a 360° pivot about $\varphi$, the LCD 10a is generally viewable when it is tilted 0° through 25° from normal (i.e. $\theta$ = 0 through 25°). However, when the LCD 10a is tilted in the range of 25° through 50+° from normal, the contrast degrades down to a minimum contrast ratio of C1, which is approximately equivalent to a contrast category of 0.424 through 6.099.

The contrast ratio in Figure 4C ranges from 0.424 through 68.55, which means that every orientation of the LCD 10a does not appear to have an acceptable image. Contrast ratios approaching values of 1 imply that pixels appear about the same whether pixels are in the on-state or the off-state. Higher contrast ratios are usually needed to produce discernable displays in conditions of high ambient light because the ambient light is reflected off of both on-state and off-state pixels, thereby reducing the contrast ratio perceived by the viewer.

Referring to Figure 4D, the acceptable image of the LCD 10a generally correlates to the orientations near the top-dead-center viewing angles. An acceptable image zone, 11a, of the LCD 10a correlates to contrast ratio categories encompassing 17.46 though 68.55 (i.e. category C4 through C12) of Figure 4C. The acceptable image zone 11 a has two criteria: the contrast ratio must be within an acceptable range for a given application, and the off-state transmission must be below an acceptable value for that application. For example, with regard to the second criteria, most negative mode automotive LCD displays must appear dark so that the displays do not appear as bright rectangular patches at night to people in the vehicle that are outside of the prime viewing area.

Light leakage of the LCD 10a tends to give the appearance that pixels are in an on-state when they are actually in an off-state. For example, when the LCD 10a is pivoted approximately $\varphi$ = 85$^0$ and approximately $\theta$ = 45$^0$ (i.e. approximately the area, Toff12, in Figure 4A), the viewer may see very noticeable light leakage at the RA = ($\varphi$ = 85$^0$, $\theta$ = 45$^0$). Thus, at the RA = ($\varphi$ = 85$^0$, $\theta$ = 45$^0$), the contrast ratio (i.e. the contrast ratio that correlates to the AFN = ($\varphi$ = 85$^0$, $\theta$ = 45$^0$)) is about CR = 34.05/53.27 = 0.64, where 53.27 is the maximum light transmission for the off-state (i.e. transmission category Toff12 in Figure 4A) and 34.05 is the maximum light transmission for the on-state (i.e. Ton3 in Figure 4B). The contrast ratio of CR = 0.64 can be verified in Figure 4C at RA = ($\varphi$ = 85$^0$, $\theta$ = 45$^0$). At RA = ($\varphi$ = 85$^0$, $\theta$ = 45$^0$), the contrast ratio category C1 ranges from 0.424 through 6.099; thus, the contrast ratio CR = 0.64 is verified as the correct contrast at RA = ($\varphi$ = 85$^0$, $\theta$ = 45$^0$) because it falls within the contrast ratio category C1 that ranges from 0.424 through 6.099.

Ideally, the off-state of the LCD 10a should have light transmission for many viewing angles that allows for maximal contrast ratios. The minimum transmission range in Figure 4A, which is the transmission category Toff1, dominates most of the plot. However, it is important to note that for a given on-state transmission value in the area covered by the transmission category Toff1, the light transmission can vary by as much as 0.785 through 5.157. Referring to the on-state of the LCD 10a in Figure 4B, even though the maximum on-state light transmission category Ton12 may be as high as 125.2, it does not necessarily result in high contrast ratios and a desirable image appearance on the LCD 10a.

Therefore, it is evident that when an LCD 10a is viewed from an angle that deviates from the prime RA, the contrast ratio decreases, and at some angles, the viewer may not be able to differentiate an off- or on-state of a specific pixel. Thus, reduced contrast at certain RAs degrades the appearance of the display to the point when the LCD is deemed not suitable for a given application.

There is a need for an LCD that maintains a reasonably high contrast ratio over a wide range of viewing angles.

Summary of the Invention

Accordingly one embodiment of the present invention is directed to a liquid crystal display that improves contrast at wide viewing angles. The liquid crystal display comprises a light source, a liquid crystal cell, and an optical plate. The light source produces light. The liquid crystal cell communicates the light. The optical plate is located in close proximity to the liquid crystal cell. The optical plate accepts light at an input acceptance angle, redirects the accepted light, and provides a wide range of output angles for a viewer.

Another embodiment of the invention is directed to a liquid crystal display that improves contrast at wide viewing angles. The liquid crystal display comprises a light source, a liquid crystal cell, an optical plate, a lenslet array, and a light absorbing layer. The light source produces light. The liquid crystal cell communicates the light. The optical plate is located in close proximity to the liquid crystal cell. The optical plate accepts light at an input acceptance angle, redirects the accepted light, and provides a wide range of output angles for a viewer. The lenslet array is disposed between the light source and the liquid crystal cell for improving light utilization and sharpness of the resultant image communicated by the liquid crystal display by redirecting the light in a direction corresponding to the acceptance angle of the optical plate. A light absorbing layer absorbs most of the light that is not acceptable for redirection by the optical plate.

Another embodiment of the invention is directed to a method for maximizing contrast of a liquid crystal display. The liquid crystal display comprises a liquid crystal cell and an optical plate. The method comprises propagating light from a light source, focusing the light from the light source, propagating the focused light through the liquid crystal cell, and transmitting light through the optical plate.

Another embodiment of the invention is directed to a liquid crystal display that improves at wide viewing angles. The liquid crystal display comprises means for propagating light, means for collimating light, means for transmitting light, and means for increasing contrast.

Brief Description of the Drawings

The present invention will now be described, by way of example, with reference to the accompanying drawings, in which:

Figure 1 is a top-dead-center observation of a LCD;
Figure 2A is a perspective observation of a conventional LCD;
Figure 2B is a perspective observation of a LCD in accordance with the invention;
Figure 3 is a representative view of an LCD observation in polar coordinates associated with a polar plot;
Figure 4A is an iso-transmission plot for the conventional LCD of Figure 2A in an "off state;"
Figure 4B is an iso-transmission plot for the conventional LCD of Figure 2A in an "on state;"
Figure 4C is an iso-contrast plot for the conventional LCD of Figure 2A according to the iso-transmission plots of Figures 4A-4B;
Figure 4D is an acceptable image plot of the LCD of Figure 2A;

Figure 5A is a cross-sectional view of the LCD of Figure 2B according to one embodiment of the invention;
Figure 5B is a cross-sectional view of the LCD of Figure 2B according to another embodiment of the invention;
Figure 6 illustrates an optical plate according to the invention that is associated with the LCD of Figure 2B;
Figure 7A is an iso-transmission plot for the LCD of Figure 2B in an "off state;"
Figure 7B is an iso-transmission plot for the LCD of Figure 2B in an "on state;"
Figure 7C is an iso-contrast plot for the LCD of Figure 2B according to the iso-transmission plots of Figures 7A-7B; and
Figure 7D is an acceptable image plot of the LCD of Figure 2B.

Description of the Preferred Embodiment

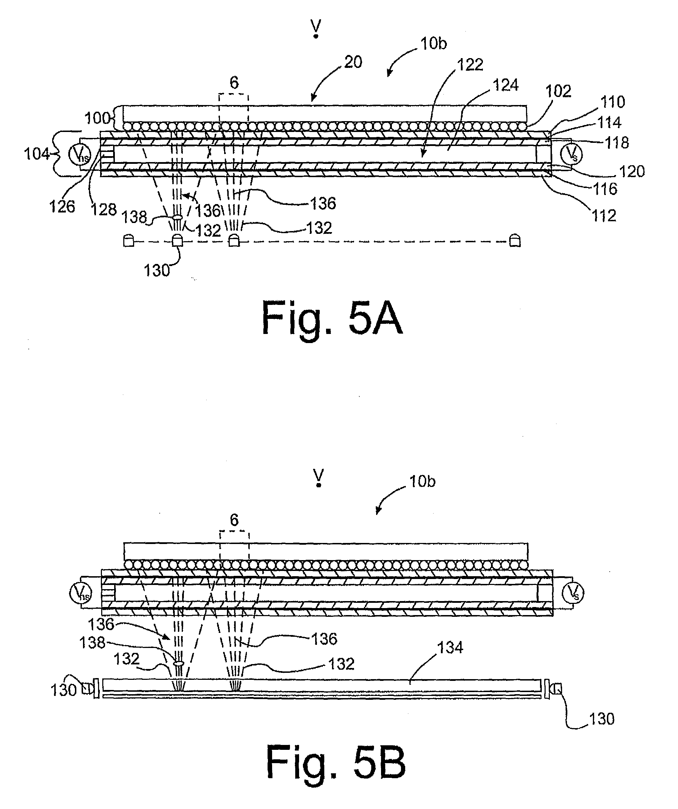

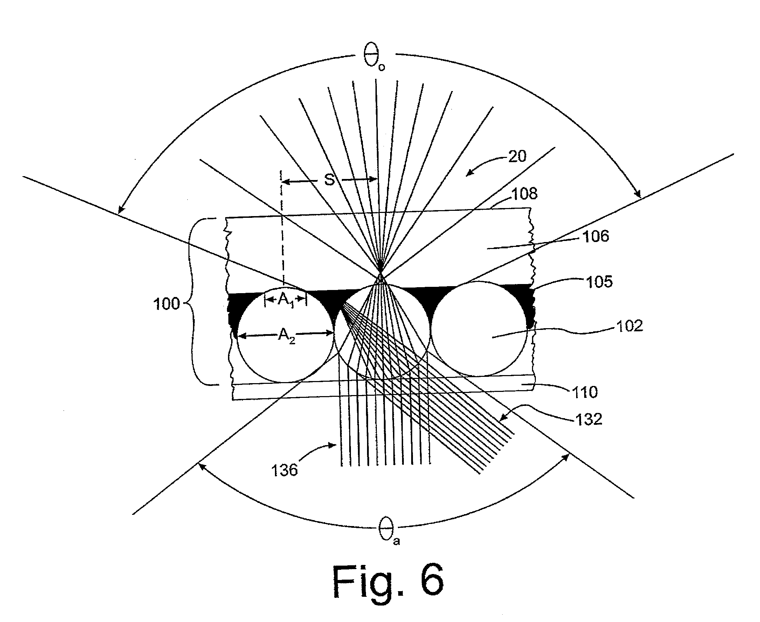

An apparatus that improves contrast at wide viewing angles has been devised. As seen in Figure 2B, an LCD 10b that deviates from the prime viewing angle, includes increasing contrast means, such as a thin optical plate 100 (Figures 5A, 5B, 6), placed over the viewing area 20 that comprises off- and on-state pixels 12, 14. The thin optical plate 100 permits a similar and even transmission of luminance for the LCD 10b. Even though the LCD 10b deviates from the prime viewing angle at a reference angle (RA), the LCD 10b is comparable in appearance to the LCD 10 (Figure 1) that is observed from a normal viewing angle (i.e. a viewing angle close to prime viewing angle).

The thin optical plate 100, which is located in close proximity to the LCD 10b, accepts light at an input acceptance angle, $\theta_a$, redirects the accepted light, and provides a wide range of output angles, $\theta_o$ (Figure 6), for a viewer, V (Figures 5A and 5B). Thus, optical plate 100 improves the contrast ratio at wide viewing angles. The improved contrast ratio, permits the viewer, V, to differentiate the off-state pixels 12 from the on-state pixels 14 regardless of the RA of the display. Although the viewer, V, is generally shown normal to the center of the LCD 10b in Figures 5A and 5B, the viewer, V, may be located at other viewing angles other than normal to the LCD 10b.

Referring to Figures 5A and 5B, the LCD 10b includes transmitting means, such as a liquid crystal cell 104, that comprises a top glass layer 110, a bottom glass layer 112, a top electrode 114, a bottom electrode 116, a top alignment layer 118, a bottom alignment later 120, a fluid gap 122, and a layer of liquid crystal (LC) fluid 124. The cell 104 also comprises a seal 126 and an opening 128 for the depositing of the LC fluid 124 in the fluid gap 122. The cell 104 also comprises voltage sources $V_{ns}$, $V_s$ connected at opposing ends of the cell 104 to the electrodes 114, 116.

A light source 130, such as a light emitting diode (LED) or florescent light, generates light 132 toward the optical plate 100. The light source 130 may be arrayed as shown in Figure 5A, or the light source 130 may propagate from propagating means, such as a light pipe 134, as shown in Figure 5B. The bottom of the optical plate 100 contains optical micro-spheres 102, which are preferably smaller in dimension than the pixels 12, 14. The micro-spheres 102 transmit light and widen the viewing angle for the viewer, V.

As seen in Figure 6, which is referenced from dashed line 6 in Figures 5A and 5B, the rear surface of the optical plate 100 that contains the plurality of micro-spheres 102 are spaced apart at an approximate distance, S. The spacing, S, of the micro-spheres 102 in the optical plate 100 is called the grain size. A very fine grain is desirable so that many micro-spheres 102 do not form noticeable spatial beats with the array of pixels so that the majority of spheres transmit light from a given pixel without averaging the light of adjacent pixels. The micro-spheres 102 provide attenuation of the light 132 communicated by the LCD 10b at angles with non-optimal contrast while the light absorbing layer 105 improves contrast by attenuating ambient reflected light.

The micro-spheres 102 accept light from almost any angle in its hemisphere facing towards the light source 130 (Figures 5A and 5B). The light source 130 may produce the light 132 over a range of angles that are off-normal of the micro-spheres 102. However, only light that enters close to the normal, such as normal light 136 from the source 130, is able to pass a light absorbing layer 105 (Figure 6), which is located about the micro-spheres 102, for propagation towards the viewer, V, at a wide output angle, $\theta_o$.

A portion of the surface of the micro-spheres 102 that faces the viewer, V, which protrudes through the light absorbing layer 105 and passes the normal light 136, defines output apertures, $A_1$, and the output angle, $\theta_o$. A portion of the micro-spheres 102 that protrudes below the light absorbing layer defines input apertures, $A_2$, and the acceptance angle, $\theta_a$. The output apertures, $A_1$, are smaller than the input apertures, $A_2$, and improve the contrast ratio by limiting the acceptance angle, $\theta_a$.

The light absorbing layer 105 also improves the contrast ratio when the LCD 10b is used in conditions that are associated with a high amount of ambient light. When there is a high amount of ambient light, the contrast ratio of the system is defined by the luminance of an on-pixel added to any ambient light directed toward the viewer, V, divided by the luminance of an off-pixel that is also added to any ambient light directed toward the viewer, V. The contrast is increased as the luminance of the ambient light reflected in the direction of the viewer, V, decreases. The ratio of the apertures $A_1$, $A_2$ in the light absorber 105 compared to the total surface area of the light absorber 105 is much greater than 1. Therefore, most of the ambient light impinging on the light absorber 105 is absorbed and the ambient light would otherwise reflect or scatter off structures behind the light absorber 105.

Referring back to Figures 5A through 5B, because the light source 130 tends to produce light 132 in many directions that is not normal to the micro-spheres 102 in the optical plate 100, collimating means, such as a multiple lenslet array 138, may be disposed between the light source 130 and the LCD 10b for improving light utilization of the LCD 10b by redirecting the light 132 in a direction corresponding to the normal of the micro-spheres 102. Essentially, the lenslet array 138 collimates the light 132 into normal light 136 corresponding to the micro-spheres 102 so as to utilize the available light 132 more efficiently. The normalized light 136 also helps maintain a sharp image by reducing the spreading of the light rays within the LCD 10b and up to the rear surface of the optical plate 100. However, if the LCD 10b is sufficiently thin, it may not be necessary to collimate the light 132 with the lenslet array 138, although light collimation may still improve light utilization efficiency.

Referring back to Figure 6, if the array of micro-spheres 102 are perfectly ordered and formed in a two-dimensional single layer array (not shown), the micro-spheres 102 pack along three axes $120^0$ apart from one and other, thus forming a triangular area between each set of mutually contacting micro-spheres 102 about the light absorbing layer 105. The remaining light 132 (i.e. off-normal light) that is not intercepted by the lenslets 138 in the array will be absorbed by the light absorbing layer 105 in the optical plate 100.

A clear substrate 106 may also be located above the light absorbing layer 105. A film sheet 108 may also be laminated to the outer surface of the clear substrate 106 in order to provide additional support for the structure of the optical plate 100. In addition, the top surface of material closest to the viewer, V, may be coated with a thin film anti-reflection coating in order to improve system contrast by minimizing the surface fresnel reflections.

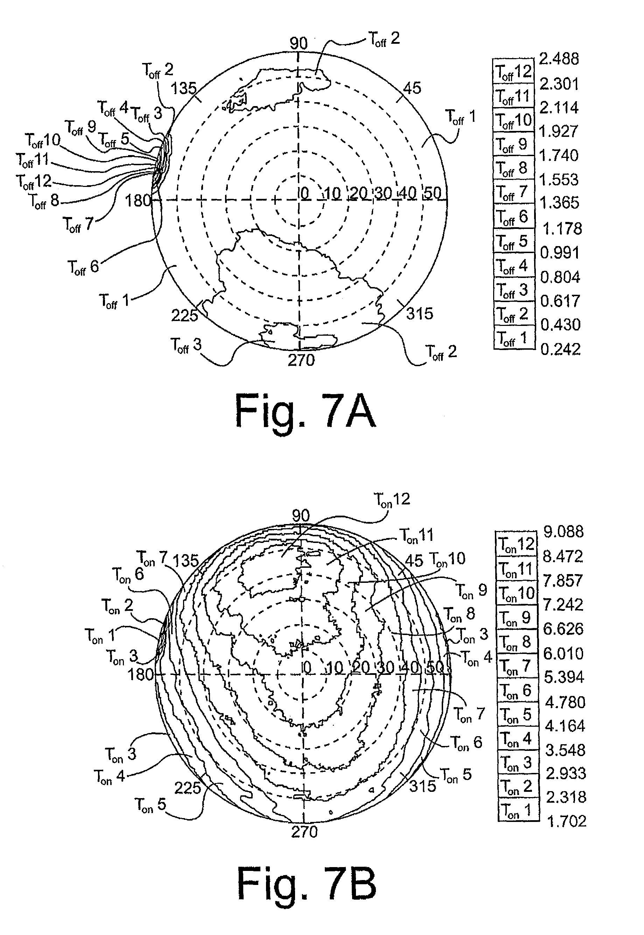

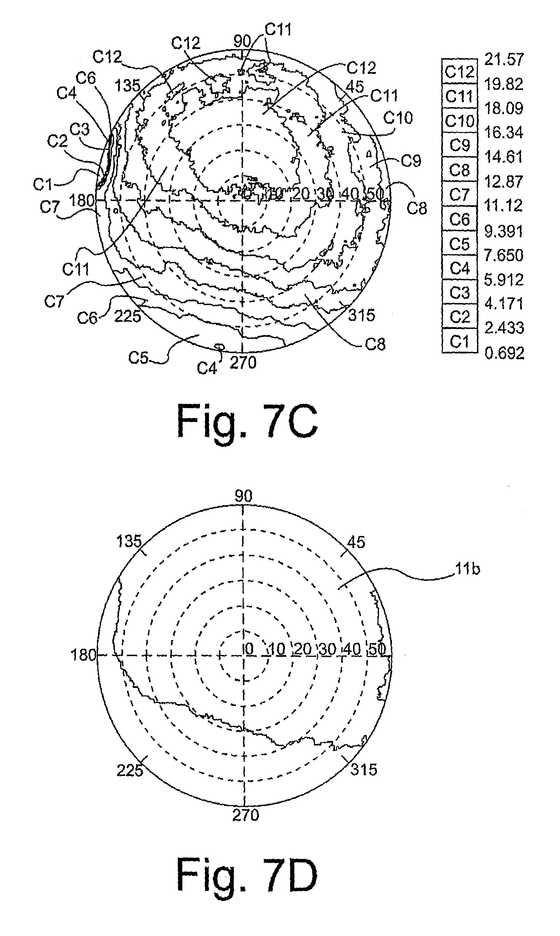

Referring now to the transmission plots, Figures 7A through 7B show iso-transmission plots for the off-state and on-state of the LCD 10b, respectively, which are used to generate data for the iso-contrast plot of Figure 7C for the LCD 10b. The iso-contrast plot is generated by dividing the data used to generate the on-state transmission plot of Figure 7B by the data used to generate the off-state transmission plot of Figure 7A. The maximum off-state transmission category, Toff12, in the off-state transmission plot of Figure 7A for the LCD 10b with the optical plate 100 is 21.4 times less than the equivalent of the off-state transmission plot of Figure 4A for the LCD 10a that does not include the optical plate 100. The minimum off-state transmission category, Toff1, in the transmission plot of Figure 7A dominates the plot at almost every viewing angle. Thus, it is apparent that the optical plate 100 blocks illuminating light, which would otherwise pass through the off-state pixel, resulting in an off-state pixel appearance of the LCD 10b when the LCD 10b is essentially off.

The optical plate attenuates much of the light that passes through the LCD 10b, so in general, the luminance values of the on-state iso-transmission plot in Figure 7B are less than those in Figure 4B. In order for the optical system of the LCD 10b to have the same on-state luminance as the prior art LCD 10a, a higher intensity illumination source would be required. However, increasing the intensity of the illumination source does not impact the contrast ratio because the on-state transmission and the off-state transmission are both proportionally increased by the same factor.

Figure 7C is the plot of the iso-contrast ratio of the LCD 10b with the optical plate 100 and is defined by a ratio of the on-state iso-transmission plot (Figure 7B) divided by the off-state iso-transmission plot (Figure 7A). The maximum contrast category, C12, in Figure 7C for the LCD 10b is approximately equivalent to 19.82 through 21.57 and is approximately located at AFN = ($\varphi$ = $25^0$, $\theta$ = $90^0$). The LCD 10b is generally viewable from $0^0$ through 50+$^0$ from the normal to the LCD surface (i. e. C6 through C12). The optical plate 100 significantly improves the contrast ratio of the LCD 10b when compared to the LCD 10a that does not include the optical plate 100.

Although the minimum contrast ratio, C1, of the LCD 10b in Figure 7C ranges from 0.692 through 2.433, it is not very evident on the plot. The higher contrast ratios from C6 through C12 dominate the contrast plot of the LCD 10b. Referring to Figure 7D, an acceptable image zone 11b of the LCD 10b is generally evident for nearly every viewing angle of the LCD 10b. The acceptable image zone 11b of the LCD 10b correlates to contrast ratios of C9 through C12 in Figure 7C.

Similar optical plates to that of optical plate 100, such as the XRVS 120 Non-Glare produced by 3M, are commercially available and are applied to rear projection screens, movie projectors, slide projectors, and projection televisions. In these projection systems, an image is focused on the optical plate from a source that is distant from the plate. The optical plate forms a real image which can then be viewed from a wide range of angles. However, in the inventive system described above, normal light 136 from the LCD 10b that reaches the micro-spheres 102 is predominately collimated from the lenslet array 138. Alternatively, in the inventive system, non-collimated light 132 passes through the LCD 10b and impinges on the micro-spheres 102, which preferentially accepts rays of light close to the normal for subsequent redirection over a wide output angle, $\theta_o$, on the viewing side of the optical plate 100. The light 132, which passes though the LCD 10b and impinges on the micro-spheres 102 at angles farther away from the normal, is preferentially absorbed by the absorbing layer 105 in the optical plate 100. The image formed on the viewer side of the optical plate 100 maintains acceptable sharpness due to the close proximity of the optical plate 100 to the image forming LCD 10b due to the preferential transmission of normal impinging light 136, which may be normalized by the lenslet array 138. Therefore, the optical plate 100 improves and provides an acceptable contrast ratio, CR, and luminance for the LCD 10b.

It should be understood that various alternatives to the embodiments of the invention described herein may be employed in practicing the invention. It is intended that the following claims define the scope of the invention and that the method and apparatus within the scope of these claims and their equivalents be covered thereby.

## Claims

1. A liquid crystal display (10b) that improves contrast at wide viewing angles, comprising:

   a light source (130) that produces light (132, 136);
   a liquid crystal cell (104) that communicates the light (132, 136); and
   an optical plate (100) located in close proximity to the liquid crystal cell (104) that accepts light (132, 136) at an input acceptance angle ($\theta_a$), redirects the accepted light (132, 136), and provides a wide range of output angles ($\theta_o$) for a viewer (V).

2. The liquid crystal display (10b) according to claim 1 further comprising
   a lenslet array (138) disposed between the light source (130) and the liquid crystal cell (104) for improving light utilization and sharpness of the resultant image communicated by the liquid crystal display (10b) by redirecting the light (132) in a direction corresponding to the acceptance angle ($\theta_a$) of the optical plate (100).

3. The liquid crystal display (10b) according to claim 2, wherein the light (132) redirected by the lenslet array (138) is normal light (136) that is redirected towards the acceptance angle ($\theta_a$) of the optical plate (100)

4. The liquid crystal display (10b) according to claim 1 further comprising a light absorbing layer (105) that absorbs light (132) that is not acceptable for redirection by the optical plate (100).

5. The liquid crystal display (10b) according to claim 4, wherein the light absorbing layer (105) absorbs off-normal light (132).

6. The liquid crystal display (10b) according to claim 4, wherein the optical plate (100) is defined by a plurality of micro-spheres (102) that limits the input ac-

ceptance angle ($\theta_a$).

**7.** The liquid crystal display (10b) according to claim 6, wherein the micro-spheres (102) define input and output apertures ($A_2$, $A_1$) of the light absorbing layer (105) that defines the acceptance and output angles ($\theta_a$, $\theta_o$), respectively, wherein the micro-spheres (102) provide attenuation of the light (136) communicated by the liquid crystal cell (104) at angles with non-optimal contrast and improves contrast by attenuating ambient reflected light.

**8.** The liquid crystal display (10b) according to claim 7, wherein the output apertures ($A_1$) are smaller than the input apertures ($A_2$).

**9.** The liquid crystal display (10b) according to claim 1, wherein the light source array (130) is a light emitting diode array.

**10.** The liquid crystal display (10b) according to claim 1, wherein the light source (130) is a florescent light.

**11.** The liquid crystal display (10b) according to claim 1 further comprising a lightpipe (134).

**12.** A liquid crystal display (10b) that improves contrast at wide viewing angles, comprising:

a light source (130) that produces light (132, 136);
a liquid crystal cell (104) that communicates the light (132, 136);
an optical plate (100) located in close proximity to the liquid crystal cell (104) that accepts light (132, 136) at an input acceptance angle ($\theta_a$), redirects the accepted light (132, 136), and provides a wide range of output angles ($\theta_o$) for a viewer (V);
a lenslet array (138) disposed between the light source (130) and the liquid crystal cell (104) for improving light utilization and sharpness of the resultant image communicated by the liquid crystal display (10b) by redirecting the light (132) in a direction corresponding to the acceptance angle ($\theta_a$) of the optical plate (100); and
a light absorbing layer (105) that absorbs light (132) that is not acceptable for redirection by the optical plate (100).

**13.** A method for maximizing contrast of a liquid crystal display (10b) and increasing a viewing angle of a viewer (V), the liquid crystal display (10b) comprising a liquid crystal cell (104) and an optical plate (100), the optical plate (100) comprising a plurality of micro-spheres (102), comprising the steps of:

propagating light (132, 136) from a light source (130);
focusing the light (132, 136) from the light source (130);
propagating the focused light (132, 136) through the liquid crystal cell (104); and
transmitting light (132, 136) through the optical plate (100).

**14.** The method for maximizing contrast of a liquid crystal display (10b) and increasing a viewing angle of a viewer (V) according to claim 13, wherein the focusing step is defined by collimating light (132, 136) to the normal of the micro-spheres (102).

**15.** The method for maximizing contrast of a liquid crystal display (10b) and increasing a viewing angle of a viewer (V) according to claim 13, wherein the light source (130) is a light emitting diode.

**16.** A liquid crystal display (10b) that improves contrast at wide viewing angles, comprising:

means for propagating light (132, 136) from a light source (130);
means for collimating the light (132, 136) from the light source (130);
means for transmitting the collimated light (132, 136) from the light source (130); and
means for increasing contrast of the liquid crystal display (10b) that transmits the collimated light (132, 136).

**17.** The liquid crystal display (10b) according to claim 16, wherein the propagating means is a light pipe (134).

**18.** The liquid crystal display (10b) according to claim 16, wherein the collimating means is a lenslet array (138).

**19.** The liquid crystal display (10b) according to claim 16, wherein the light transmitting means is at least one liquid crystal cell (104).

**20.** The liquid crystal display (10b) according to claim 16, wherein the increasing contrast means is an optical plate (100), wherein the optical plate (100) is defined by a plurality of micro-spheres (102) and a light absorbing layer (105).

Fig. 2A
(Prior Art)

Fig. 2B

Fig. 1

RA = Phi 240°, Theta 25°

# Fig. 3

Fig. 4A (Prior Art)

Fig. 4B (Prior Art)

Fig. 4C (Prior Art)

Fig. 4D (Prior Art)

Fig. 5A

Fig. 5B

Fig. 6

Fig. 7A

Fig. 7B

Fig. 7C

Fig. 7D